# EUROPÄISCHE PATENTSCHRIFT

(11) **EP 1 134 403 B1**
(45) Veröffentlichungstag und Bekanntmachung des Hinweises auf die Patenterteilung: **13.08.2003**
(21) Anmeldenummer: 01104771.9
(22) Anmeldetag: 27.02.2001
(51) Int. Cl.: F02M 25/07

(54) **Brennkraftmaschine mit Abgasrückführung**
Combustion engine with exhaust gas recirculation
Moteur à combustion avec recirculation de gaz d'échappement

(30) Priorität: 15.03.2000 DE 10012588
(43) Veröffentlichungstag der Anmeldung: 19.09.2001
(73) Patentinhaber: FILTERWERK MANN + HUMMEL GMBH, 71638 Ludwigsburg (DE)
(72) Erfinder: Fischer, Jochem, 71672 Marbach (DE)
(74) Vertreter: Voth, Gerhard, Dipl.-Ing.

(56) Entgegenhaltungen:
- DE-A- 19 642 685
- GB-A- 1 549 387
- JP-A- 4 058 056
- JP-A- 5 157 008
- JP-A- 6 123 259
- JP-A- 7 091 322
- US-A- 5 746 189
- PATENT ABSTRACTS OF JAPAN vol. 1999, no. 09, 30. Juli 1999 (1999-07-30) & JP 11 107862 A (MITSUBISHI HEAVY IND LTD), 20. April 1999 (1999-04-20)

## Beschreibung

### Stand der Technik

Die Erfindung betrifft eine Brennkraftmaschine mit einer Abgasrückführung zu mehreren Zylindern nach der Gattung des Patentanspruches 1.

Die Rückführung von Abgas in den Ansaugtrakt von Brennkraftmaschinen ist bekannt. Dabei ist es gemäß der DE 197 27 385 A1, Spalte 2, vorteilhaft, wenn sich die Menge des in den Brennraum der Brennkraftmaschine zurückgeführten Abgases möglichst genau einstellen lässt. Durch eine umfassende Steuerung und/oder Regelung der Abgasrückführung können auf diese Weise die Stickoxydemission mit Hilfe der Abgasrückführung auf ein Minimum reduziert werden. Dies lässt sich z. B. durch ein Schichtladungsprinzip erreichen, wobei die Zylinder abwechselnd mit Schichten von Abgasen und Verbrennungsgemisch beaufschlagt werden.

Zu diesem Zweck ist eine möglichst genaue Dosierung des Abgases in den Ansaugtrakt der Brennkraftmaschine notwendig. Gemäß der EP 911 502 A2 wird daher ein Leitungssystem zur Abgasrückführung vorgeschlagen, welches eine Abzweigung pro Saugkanal zu den Zylindern aufweist. Auf diese Weise lässt sich die rückgeführte Abgasmenge direkt vor den Zylindern einleiten, wodurch die Dosierung von Abgas für jeden Zylinder einzeln erfolgt.

Um ein optimales Ergebnis hinsichtlich der Stickoxydverminderung zu erreichen, muss das Abgas jedoch sehr genau dosiert werden. Weiterhin ist für den Schichtladungsbetrieb aufgrund der unterschiedlichen Taktzeiten der einzelnen Zylinder eine gesonderte Ansteuerung aller Abgasrückführungen für die einzelnen Zylinder notwendig.

Jedoch müssen bei der Steuerung bzw. Reglung des Abgasrückführsystem dessen physikalische Eigenschaft beachtet werden. Gemäß der DE 197 27 385 A1, Spalte 3, oben kann nicht ohne weiteres zwischen verschiedenen Betriebszuständen gewechselt werden. Vielmehr müssen hierbei die Strömungszustände im Abgasrückführsystem beachtet werden, da aufgrund der Leitungswege gewisse Totzeiten bei der Abgaseinleitung entstehen. Bei schnell wechselnden Betriebszuständen kann die Abgasrückführung daher nicht sofort hinsichtlich einer optimalen Stickstoffemission angepasst werden.

*Aus der JP 6-123259 ist ein Abgasrückführsystem bekannt. Das zurückgeführte Abgas wird direkt in die Brennkammer eingeleitet. Die JP 4-58056 beschreibt ein Abgasrückführsystem, welches das Abgas ausgehend von einem gemeinsamen Verteiler über einzelne getrennte Leitungen der Brennkammer des jeweiligen Zylinders zuführt. Die JP 11107862 beschreibt ein Ventil zur Einleitung von Abgasen in die Brennkammer. Dieses ist unmittelbar oberhalb der Brennkammer angeordnet und dient zum Einspritzen des Kraftstoffs und zum Zuführen von Abgas in den Zylinder.*

Aufgabe ist es daher, eine Brennkraftmaschine mit einer Abgasrückführung zu schaffen, die ein sicheres Betriebsverhalten aufweist, und sich ohne wesentliche Verzögerungen an den aktuellen Betriebszustand der Brennkraftmaschine anpassen lässt. Diese Aufgabe wird durch die Merkmale des Patentanspruches 1 gelöst.

### Vorteile der Erfindung

Die erfindungsgemäße Brennkraftmaschine weist in bekannter Weise einen Ansaugtrakt auf, der zu den Einlässen der Zylinder führt und eine Abgasanlage, die sich an die Auslässe der Zylinder anschließt. Es ist eine Rückführleitung zur Rückführung des Abgases vorgesehen, die an die Abgasanlage angeschlossen ist. Die Rückführleitung weist Abzweigungen auf, die direkt in die Brennräume der Zylinder münden. Es ist mindestens ein Rückführventil vorgesehen, welches zur Steuerung der rückgeführten Abgasmenge dient. Alternativ hierzu kann auch in jeder der Abzweigungen, die die Zylinder versorgen, ein Rückführventil vorgesehen sein. Gemäß der Erfindung kann das Rückführsystem für das Abgas jedoch auch teilweise in die Zylinderkopfhaube integriert werden. Die Zylinderkopfhaube steht in direkter Verbindung mit dem Zylinderkopf, so dass Kanalstrukturen zur Leitung des Abgases zwischen diesen beiden Bauteilen gebildet werden können. Dies wirkt sich auf die Fertigungskosten der Brennkraftmaschine aus, da die Komplexität der Einzelteile verringert wird.

Die Rückführung des Abgases direkt in die Zylinder führt zu einer Verringerung der auftretenden Totzeiten bei der Rückführung. Sobald die Rückführventile geöffnet werden, strömt Abgas in den Brennraum der Brennkraftmaschine. Hierdurch lässt sich eine optimale Schichtladung erreichen, bei der sich zumindest das Verbrennungsgemisch und das Abgas einander abwechseln.

Die erfindungsgemäße Abgasrückführung kann bei allen Typen von Verbrennungskraftmaschinen verwendet werden. Eine Verbesserung der Emissionswerte lässt sich sowohl bei Dieselmotoren wie auch bei Ottomotoren erzielen. Zur Bildung geeigneter Schichtungen in den Zylindern lassen sich abhängig von dem Betriebszustand der Brennkraftmaschine Kennfelder hinterlegen. Mit deren Hilfe kann die Abgasrückführung optimal auf den aktuellen Zustand der Brennkraftmaschine angepasst werden, weil die rückgeführte Abgasmenge ohne Totzeiten geändert werden kann. Auf diese Weise kann auch bei schnell wechselnden Betriebszuständen der Brennkraftmaschine eine optimale Stickoxydverminderung der Abgase erreicht werden. Dabei ist eine Ansteuerung der einzelnen Abzweigungen durch einzelne Ventile besonders vorteilhaft.

Die Einmündungen der Abzweigungen in den Zylinder können zwischen den Einlassund Auslassventilen angebracht sein. An dieser Stelle steht zwischen den Ventilmechanismen ein Einbauraum im Zylinderkopf zur Verfügung.

Eine besonders vorteilhafte Ausbildung der Erfindung ergibt sich, wenn die Rückführventile in den Abzweigungen direkt an die Brennräume der Zylinder angrenzen. Hierdurch lassen sich die Totzeiten bei der Einleitung von Abgas in die Brennräume der Zylinder fast vollständig vermeiden, da diese lediglich von der Öffnungs- bzw. Schließgeschwindigkeit der Ventile abhängig sind. Als Ventile können Nadelventile verwendet werden, die einen geringen Einbauraum erfordern, und daher im Bereich der Zylinder angeordnet werden können. Diese Nadelventile haben entweder eine Magnetbetätigung oder ein Antrieb über Piezo-Kristalle. Hierdurch lassen sich die Ansprechzeiten der Ventile zusätzlich verringern, so dass eine direkte betriebsabhängige Ansteuerung durch die bereits genannten Kennfelder möglich ist.
Selbstverständlich lassen sich auch andere Ventilmechanismen verwirklichen.

Sofern die Brennkraftmaschine mit einer Direkteinspritzung versehen ist (gilt für Ottound Dieselmotoren), können gemäß einer weiteren Ausgestaltung der Erfindung die Rückführventile in die Kraftstoffventile zur Direkteinspritzung des Kraftstoffes integriert sein. Hier ergibt sich eine Baueinheit für den Ventilmechanismus, wobei entweder sowohl für die Rückleitung des Abgases als auch für die Zuführung des Kraftstoffes ein eigener Ventilmechanismus vorgesehen sein kann, oder das Abgas abhängig von der Einleitung des Kraftstoffes mitgerissen werden kann, wobei in diesem Fall nur ein Kraftstoffventil nötig ist. Für eine optimale Schichtladung muss jedoch für das Abgas sowie für den Kraftstoff ein gesonderter Ventilmechanismus vorgesehen werden. Dabei lässt sich durch abwechselndes Öffnen des Kraftstoffsowie des Rückführventils eine beliebige Schichtung in den Zylindern erreichen. Dabei kann in jedem Betriebszustand der Brennkraftmaschine das Verbrennungsverhalten hinsichtlich einer möglichst geringen Schadstoffsemission optimiert werden.

Bei Dieselmotoren lässt sich auf diese Weise zusätzlich eine Vorverbrennung des Kraftstoffs in den Brennräumen der Zylinder erreichen. Auf diese Weise lässt sich die Geräuschemission der Dieselmotoren beträchtlich verringern. Die Vorverbrennung verhindert insbesondere im Leerlauf des Dieselmotors das als Nageln bezeichnete Laufgeräusch.

Gemäß einer weiteren Ausgestaltung der Erfindung kann jedem Rückführventil zusätzlich eine Frischluft-Zuführung zugeordnet werden. Die Frischluftzuführung schafft weitere Variationsmöglichkeiten für den Schichtungsbetrieb in den Brennräumen der Zylinder. Über die Frischluftzufuhr kann insbesondere bei Direkteinspritzung des Kraftstoffes dieser schon im Bereich der Einspritzdüse mit Frischluft vermischt werden, sofern das Rückführventil in das Kraftstoffventil integriert ist.

Vorteilhafterweise kann auch die Frischluftzuführung mit mindestens einem Frischluftventil versehen werden. Für den Fall, dass nur ein Frischluftventil angeordnet ist, muss dieses zentral die Luftzuführung zu allen Zylindern steuern. Selbstverständlich ist es auch möglich, für jeden Zylinder ein Frischluftventil vorzusehen. Hierdurch ergeben sich zusätzliche Variationsmöglichkeiten, die ebenfalls in einem Kennfeld abgelegt werden können. Insbesondere können auch die Frischluftventile im Bereich der Zylinder zusammen mit dem Rückführventil kombiniert werden.

Für den Fall, dass die Brennkraftmaschine einen gemeinsamen Zylinderkopf für alle Zylinder aufweist, lassen sich zumindest die Abzweigungen der Rückführleitung oder auch die gesamte Rückführleitung inklusive der Entnahmestelle für das Abgas in den Zylinderkopf integrieren. Hierbei entstehen enorm kurze Leitungswege, wodurch Strömungsverluste vermieden werden und die Ansprechzeiten bei der Abgasrückführung auf ein Minimum reduziert werden können. Weiterhin lassen sich auf diese Weise Dichtmittel einsparen, die bei Verlegung gesonderter Leitungen an den Anschlussstellen der Leitungsteile notwendig würden. Hierdurch lässt sich die Funktionszuverlässigkeit der Abgasrückführung steigern, da keine Undichtigkeiten auftreten können, die ein Austreten von ungereinigtem Abgas in die Umwelt bewirken würde.

Weiterhin kann in der Rückführleitung ein Mittel zur Partikelabscheidung aus dem Abgas vorgesehen sein. Hierdurch werden die Rückführventile geschont, da insbesondere bei Dieselmotoren das Abgas mit einem hohen Anteil von Rußpartikeln versehen ist. Diese würden auf Dauer die Funktion der Rückführventile beeinträchtigen, da diese verschmutzen würden.

Als Mittel zur Abscheidung sind z. B. Siebe in den Leitungen oder auch Zyklone denkbar. Der abgeschiedene Ruß kann entweder in die Abgasanlage zurückgeführt werden oder im Mittel zur Abscheidung gespeichert werden. Das Mittel zur Partikelabscheidung kann selbstverständlich ebenfalls in die Zylinderkopfhaube und Zylinderkopf integriert sein. Alternativ ist es auch möglich, für diese Mittel ein gesondertes Gehäuse vorzusehen, was insbesondere dann sinnvoll ist, wenn ein Filtereinsatz zur Partikelfilterung ausgewechselt werden muss.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: den schematischen Aufbau einer Brennkraftmaschine mit Ansaugtrakt und Abgasanlage und Abgasrückführung und
- Figur 2: den schematischen Schnitt durch einen Zylinder mit direkter Kraftstoff sowie Abgaszuführung in den Brennraum.

### Beschreibung der Ausführungsbeispiele

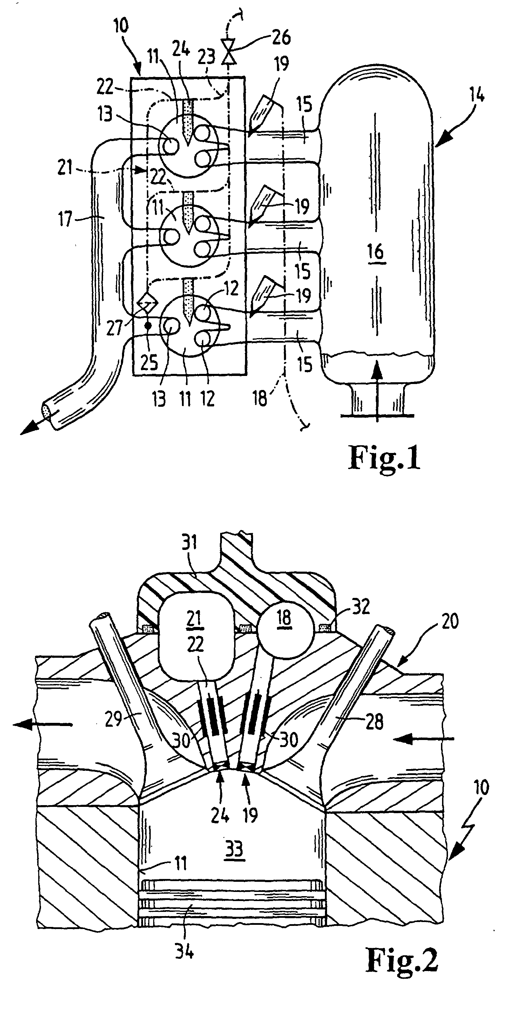

Die in Figur 1 dargestellte Brennkraftmaschine weist einen Motorblock 10 mit drei Zylindern 11 auf. Die Zylinder weisen je zwei Einlässe 12 und einen Auslaß 13 auf. Die Einlässe sind mit einem Ansaugtrakt 14, bestehend aus Saugkanälen 15, und einem Sammler 16 verbunden. An die Auslässe 13 schließt sich eine Abgasanlage 17 an. Der Strom der Verbrennungsluft bzw. des Abgases ist durch Pfeile angedeutet.

Der Kraftstoff wird über eine Kraftstoffleitung 18 und Kraftstoffventile 19 den Saugkanälen 15 zugeleitet. Weiterhin sind in einem Zylinderkopf (Vergleiche 20 in Figur 2), der Teil des Motorblocks 10 ist, eine Abgasrückführleitung 21 mit Abzweigungen 22 und eine Frischluftleitung 23 integriert. Die Abzweigungen 22 sind mit Rückführventilen 24 versehen, die direkt in die Zylinder führen. Werden diese geöffnet, so strömt das in einer Entnahmestelle 25 abgezweigte Abgas aus dem Abgastrakt 14 durch die geöffneten Rückführventile 24 direkt in die Zylinder 11. Weiterhin kann gleichzeitig über die Rückführventile Frischluft über die Frischluftleitung 23 den Zylindern zugeführt werden, sofern ein Frischluftventil 26 geöffnet wird. Weiterhin ist in der Rückführleitung 21 hinter der Entnahmestelle 25 ein Mittel zur Partikelabscheidung 27 in Form eines Rußfilters vorgesehen.

In Figur 2 ist eine mögliche Anordnung von Kraftstoffventil 19 zur Direkteinspritzung sowie dem Rückführventil 24 dargestellt. Die Zuführungen dieser beiden Ventile befinden sich zwischen einem Einlassventil 28 und einem Auslassventil 29. Die Ventile 19, 24 besitzen einen Magnetantrieb 30.

Das Rückführventil 24 ist über die Abzweigung 22 mit der Rückführleitung 21 verbunden. In ähnlicher Weise ist das Kraftstoffventil 19 mit der Kraftstoffleitung 18 verbunden. Kraftstoffleitung 18 sowie Rückführleitung 21 werden teilweise durch den Zylinderkopf 20 und teilweise durch eine angedeutete Zylinderkopfhaube 31 gebildet und sind damit in den Motorblock 10 integriert. Zwischen Zylinderkopf 20 und Zylinderkopfhaube 31 befindet sich eine Dichtung 32.

Durch die Anordnung der Ventile kann während der Ansaugung von Verbrennungsluft durch das Einlassventil 28 eine Schichtung von Kraftstoffgemisch und Abgasgemisch in einem Brennraum 33 gebildet werden, der durch den Zylinder 11 sowie einen Kolben 34 gebildet ist. Die Ventile 19, 24 sind als Nadelventile ausgeführt, so dass eine präzise Zumischung an Kraftstoff bzw. Abgas möglich ist.

## Patentansprüche

1. Brennkraftmaschine mit mehreren Zylindern (11), deren Einlässe (12) mit einem Ansaugtrakt (14) und deren Auslässe (13) mit einer Abgasanlage (17) verbunden sind, wobei an der Abgasanlage eine Rückführleitung (22) zur Rückführung des Abgases auf die Ansaugseite der Brennkraftmaschine angeschlossen ist, welche pro Zylinder (11) eine Abzweigung (22) aufweist, wobei mindestens ein Rückführventil (24) zur Steuerung der rückgeführten Abgasmenge vorgesehen ist, wobei die Abzweigungen (22) direkt in die Brennräume der Zylinder (11) münden, **dadurch gekennzeichnet, dass** die Rückführleitung (21) teilweise von einer Zylinderkopfhaube (31), die an den Zylinderkopf (20) angrenzt, mitgebildet ist.

2. Brennkraftmaschine nach Anspruch 1, **dadurch gekennzeichnet, dass** die Rückführventile (24) direkt an die Brennräume der Zylinder (11) angrenzen.

3. Brennkraftmaschine nach Anspruch 2, **dadurch gekennzeichnet, dass** die Rückführventile (24) in Kraftstoffventile (19) zur Direkteinspritzung des Kraftstoffes in die Zylinder integriert sind.

4. Brennkraftmaschine nach einem der vorherigen Ansprüche, **dadurch gekennzeichnet, dass** eine Frischluftleitung (23) zu jedem Rückführventil (24) führt.

5. Brennkraftmaschine nach Anspruch 4, **dadurch gekennzeichnet, dass** die Frischluftleitung mit mindestens einem Frischluftventil (26) versehen ist.

6. Brennkraftmaschine nach einem der vorherigen Ansprüche, **dadurch gekennzeichnet, dass** die Abzweigungen (22) der Rückführleitung in einen für alle Zylinder (11) gemeinsam vorgesehenen Zylinderkopf (20) integriert sind.

7. Brennkraftmaschine nach Anspruch 6, **dadurch gekennzeichnet, dass** die gesamte Rückführleitung (21) inklusive einer Entnahmestelle (25) für das Abgas in die Zylinderkopf (20) integriert ist.

8. Brennkraftmaschine nach einem der vorherigen Ansprüche, **dadurch gekennzeichnet, dass** in der Rückführleitung Mittel zur Partikelabscheidung (27) aus dem Abgas vorgesehen sind.

## Claims

1. Internal combustion engine, having a plurality of cylinders (11), the inlets (12) of which are connected to an intake duct (14), and the outlets (13) of which are connected to an exhaust system (17), a return line (21) communicating with the exhaust system to return the exhaust gas to the intake side of the internal combustion engine, which line has one branching-off portion (22) per cylinder (11), at least one return valve (24) being provided to control the returned quantity of exhaust gas, the branching-off portions (22) terminating directly in the combustion chambers of the cylinders (11), **characterised in that** the return line (21) is formed partly by a cylinder head cover (31), which abuts against the cylinder head (20).

2. Internal combustion engine according to claim 1, **characterised in that** the return valves (24) abut directly against the combustion chambers of the cylinders (11).

3. Internal combustion engine according to claim 2, **characterised in that** the return valves (24) are incorporated in fuel injector valves (19) for directly injecting the fuel into the cylinders.

4. Internal combustion engine according to one of the previous claims, **characterised in that** a fresh-air line (23) leads to each return valve (24).

5. Internal combustion engine according to claim 4, **characterised in that** the fresh-air line is provided with at least one fresh-air valve (26).

6. Internal combustion engine according to one of the previous claims, **characterised in that** the branching-off portions (22) of the return line are incorporated in a cylinder head (20) jointly provided for all of the cylinders (11).

7. Internal combustion engine according to claim 6, **characterised in that** the entire return line (21), including a discharge point (25) for the exhaust gas, is incorporated in the cylinder head (20).

8. Internal combustion engine according to one of the previous claims, **characterised in that** means (27) for separating particles from the exhaust gas are provided in the return line.

## Revendications

1. Moteur à combustion interne comprenant plusieurs cylindres (11) dont les admissions (12) sont reliées à un conduit d'aspiration (14) et dont les échappements (13) sont reliés à un circuit de gaz d'échappement (17), dans lequel sur le circuit des gaz d'échappement, une conduite de recyclage (22) destinée au recyclage des gaz d'échappement est raccordée au côté aspiration du moteur à combustion interne, cette conduite présentant par cylindre (11) une branche dérivée (22) avec moins une soupape de recyclage (24) prévue pour la commande de la quantité de gaz d'échappement recyclée, les branches dérivées (22) débouchant directement dans les chambres de combustion des cylindres (11),
**caractérisé en ce que**
la conduite de recyclage (21) est partiellement formée par un couvre-culasse (31) qui est attenant à la culasse (20).

2. Moteur à combustion interne selon la revendication 1,
**caractérisé en ce que**
les soupapes de recyclage (24) sont directement attenantes aux chambres de combustion des cylindres (11).

3. Moteur à combustion interne selon la revendication 2,
**caractérisé en ce que**
les soupapes de recyclage (24) sont intégrées dans les soupapes de carburant (19) destinées à l'injection directe du carburant dans les cylindres.

4. Moteur à combustion interne selon l'une des revendications précédentes,
**caractérisé en ce qu'**
une conduite d'air frais (23) conduit à chaque soupape de recyclage.

5. Moteur à combustion interne selon la revendication 4,
**caractérisé en ce que**
la conduite d'air frais est munie d'au moins une soupape d'air frais (26).

6. Moteur à combustion interne selon l'une des revendications précédentes,
**caractérisé en ce que**
les branches dérivées (22) de la conduite de recyclage sont intégrées dans une culasse (20) prévue en commun pour tous les cylindres (11).

7. Moteur à combustion interne selon la revendication 6,
**caractérisé en ce que**
la conduite de recyclage (21) est entièrement intégrée dans la culasse (20), y compris une zone de prélèvement (25) pour les gaz d'échappement.

8. Moteur à combustion interne selon l'une des revendications précédentes,
**caractérisé en ce que**
des moyens (27) servant à séparer les particules des gaz d'échappement sont prévus dans la conduite de recyclage.
